# EUROPEAN PATENT APPLICATION

(11) **EP 0 546 609 A1**
(43) Date of publication of application: **16.06.1993**
(21) Application number: 92203699.1
(22) Date of filing: 01.12.1992
(51) Int. Cl.: B60G 7/00

(54) **Integrated ball joint**

(30) Priority: 10.12.1991 US 805292
(71) Applicant: MASCO INDUSTRIES, INC., Taylor, MI 48180 (US)
(72) Inventor: Delbeke, Robert G., Livonia, MI 48152 (US); Deradoorian, John R., Farmington Hills, MI 48834 (US)
(74) Representative: Léger, Jean-François

(57) **Abstract**

An integral stamped ball joint housing for use in a vehicle suspension system. The ball joint housing may be stamped as part of the suspension system control arm thereby forming an integral control arm or may be inserted into an aperture of the control arm. The ball joint housing is stamped from a single piece of raw steel stock to form the housing according to end specifications. The process of manufacturing the stamped on-piece ball joint housing includes sequentially drawing the parent material to form the basic ball socket and thereafter sizing the outer and inner diameters of the housing to the desired configuration.

## Description

This invention relates to a one-piece stamped ball joint housing and, in particular, to a process for forming an integrated ball joint housing through the stamping of a blank parent material.

Typical control arms for vehicle suspension systems include a ball joint housing secured to the apex of the control arm. These housings include a socket within which the ball stud is captured for relative motion therein in response to vehicle road conditions. Prior ball joint housings have been formed through cold heading, extrusion or stamped multiple piece constructions. However, each of these processes has proven to be expensive and in some applications unreliable. The prior known stamped housing requires multiple pieces which are hem flanged together to form the housing. Heretofore it was believed that a one-piece ball joint housing stamped from a single piece of parent material could not be manufactured because of the tonnage required to stamp such a component.

The present invention overcomes the disadvantages of the prior known ball joint housings and processes for manufacturing such housings by providing a one-piece stamped housing formed from a single piece of raw material stock.

The ball joint housing generally includes a finished ball socket which receives the ball stud and a coined eyebrow at the opening to the socket. The housing has a generally cup-shaped configuration and may include a peripheral flange to facilitate insertion into the control arm or may be integrally formed as a component of the control arm which is simultaneously stamped.

The process of forming the ball joint housing beings with a single piece of steel stock having a predetermined material thickness. The steel stock is inserted into a high tonnage press where the socket is drawn and radiused in two stamping operations. A peripheral flange may be formed reflecting the material thickness of the parent stock. Thereafter, an "eyebrow" at the opening of the socket is coined into the housing. As a result of these operations, an integrated ball joint housing is formed requiring only minimal machining, if any. Unlike the prior known processes however, machining of the internal socket or the eyebrow are not required since the stamping operations form a properly sized and finished surface. Additional process steps may include annealing of the housing and piercing a center aperture in the housing. Accordingly, a stamped, one-piece ball joint is formed replacing the prior known machined cold header components.

Other objects, features and advantages of the invention will be apparent from the following detailed description taken in connection with the accompanying drawings.

The present invention will be more fully understood by reference to the following detailed description of a preferred embodiment of the present invention when read in conjunction with the accompanying drawing, in which like reference characters refer to like parts throughout the views and in which:

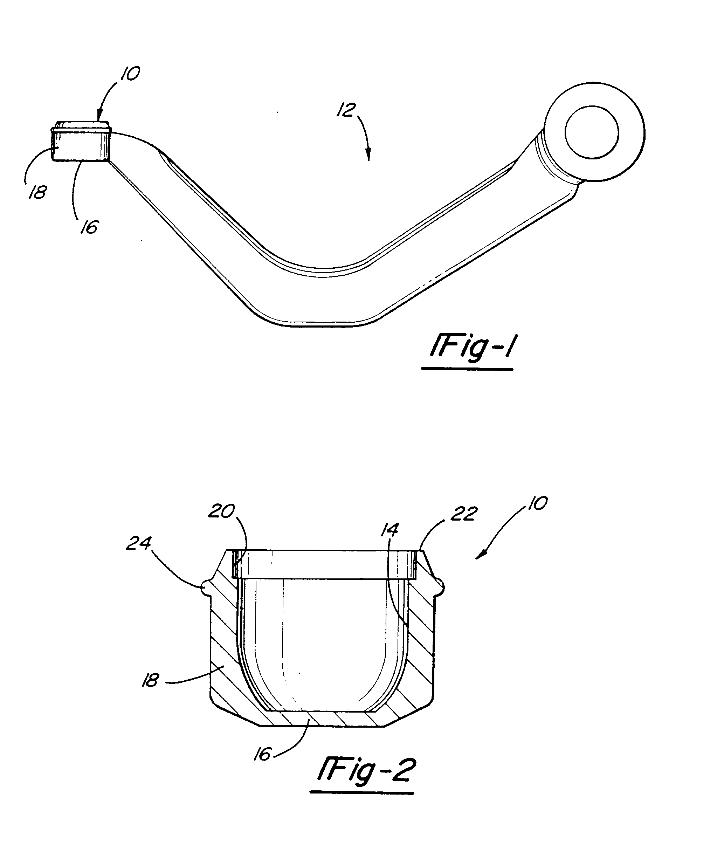

FIGURE 1 is a perspective view of a control arm of a vehicle suspension system incorporating the ball joint housing embodying the present invention; and
FIGURE 2 is a cross-sectional view of the ball joint housing embodying the present invention.

Referring to the drawings, there is shown an integrated stamped ball joint housing 10 adapted to be inserted into a control arm 12 of a vehicle suspension system. Alternatively, the housing 10 may be integrally stamped with the control arm 12 to form a single-piece control arm. The ball joint housing 10 is intended to receive a ball stud (not shown) for pivotable movement of the control arm 12 relative to the ball assembly. In a preferred embodiment of the present invention, the ball joint housing 10 is stamped from a single piece of steel stock of known thickness to fully form all of the features of the housing 10 without further machining as will be more fully described herein. A coining/stamping press with extremely heavy tonnage capabilities directed to stamping the housing 10 is needed to fully form the integral ball joint housing 10.

The ball joint housing 10 has a generally cup-shaped configuration with an internal socket 14 formed by a bottom wall 16 and a peripheral side wall 18. At the opening of the socket 14 is formed an eyebrow 20 which provides a rim 22 having a diameter greater than the diameter of the internal socket 14. A peripheral flange 24 is formed on the outside of the side wall 18. The peripheral flange 24 has a width which is substantially equal to the material thickness of the original blank from which the integral ball joint housing 10 is stamped. The flange 24 also facilitates mounting of the housing 10 within the control arm 12 by providing a peripheral edge for welding within the control arm 12. The ball joint housing 10 is adapted to receive a ball joint assembly including a ball stud within the socket 14. In order to provide a favorable mating engagement between the ball stud and the socket 14 of the housing 10, a nylon race may be inserted into the socket 14. Therefore, unlike prior known housings which require the socket to be machined to a smooth finish, the stamped construction of the present invention does not require additional machining.

The process for manufacturing the integral ball joint housing 10 essentially comprises stamping a single piece of raw steel stock to form the housing 10 using the heavy tonnage press. A steel blank of predetermined thickness is positioned with the stamping press. Successive stamping cycles, preferably first and second cycles, form the outer configuration of the housing 10 and the internal socket 14 for receiving the ball joint assembly. Next, a coining operation forms the eyebrow 20 at the opening of the socket 14. During these stamping operations the peripheral flange 24 is formed as a residual of the original steel blank. As a result, the flange 24 has a width identical to the thickness of the parent material. For improved structural integrity, the housing 10 may be annealed following stamping. In the final steps of the process, it may be desirable to form an aperture within the end of the socket 14 which cooperates with the ball joint assembly. This aperture is formed by piercing the bottom wall 16 of the housing 10 and sizing the aperture accordingly. Thus, the process of the present invention forms a one-piece integral ball joint housing stamped from a single piece of material.

The foregoing detailed description has been given for clearness of understanding only and no unnecessary limitations should be understood therefrom as some modifications will be obvious to those skilled in the art without departing from the scope and spirit of the appended claims.

## Claims

1. A process of manufacturing an integral ball joint housing for a suspension system control arm, said housing adapted to receive a ball joint assembly, comprising the steps of:
selecting a blank of steel stock having a predetermined material thickness;
stamping said blank to form said housing with an interior socket for receiving the ball joint assembly; and
coining the rim of said housing socket to form an eyebrowed opening for said socket whereby the ball joint assembly may be inserted within said ball joint housing.

2. The process as defined in claim 1 wherein said stamping step comprises a first stamping of said blank to form a first socket and a second stamping to fully form and radius socket of said housing.

3. The process as defined in claim 1 and comprising the further step of annealing said stamped and coined integral ball joint housing.

4. The process as defined in claim 3 and comprising the further step of piercing said ball joint housing to form an aperture within the end of said socket.

5. The process as defined in claim 2 wherein said stamping step forms a peripheral flange on the exterior surface of said ball joint housing, said peripheral flange having a width substantially equal to the material thickness of said blank.

6. The process as defined in claim 1 wherein said integral housing is positioned within an aperture formed in the control arm for connection of the control arm to the ball joint assembly.

7. A process of manufacturing an integral ball joint housing for a suspension system control arm, said housing adapted to receive a ball joint assembly, comprising the steps of:
selecting a blank of steel stock having a predetermined material thickness;
first stamping said blank to preform said housing socket for receiving the ball joint assembly;
second stamping said preformed housing to complete formation of said housing having an interior socket formed to a predetermined depth capable of receiving the ball joint assembly; and
coining the rim of said interior socket to form an eyebrowed opening for said socket whereby the ball joint assembly may be inserted within said ball joint housing.

8. The process as defined in claim 7 and comprising the further step of inserting a nylon ball joint race into said interior socket for cooperation with said ball joint assembly.

9. The process as defined in claim 7 and comprising the further step of annealing said stamped and coined integral ball joint housing.

10. The process as defined in claim 9 and comprising the further step of piercing said ball joint housing to form an aperture within the end of said socket.

11. The process as defined in claim 10 wherein said first and second stamping steps form a peripheral flange on the exterior surface of said ball joint housing, said peripheral flange having a width substantially equal to the material thickness of said blank to facilitate insertion of said stamped ball joint housing into the suspension system control arm.

12. A process of manufacturing an integral ball joint housing for a suspension system control arm, said housing adapted to receive a ball joint assembly, comprising:
stamping a one-piece ball joint housing from a blank having a predetermined material thickness, said housing having an interior socket and an eyebrowed rim for receiving the ball joint assembly whereby an integral housing is formed which does not require machining of said interior socket and eyebrow rim.
